Europäisches Patentamt

(19) **European Patent Office**

Office européen des brevets

(11) Numéro de publication: **0 247 113**
**B1**

(12) **FASCICULE DE BREVET EUROPEEN**

(45) Date de publication du fascicule du brevet: **16.08.90**

(51) Int. Cl.⁵: **B 01 D 53/34, F 23 J 15/00**

(21) Numéro de dépôt: **86906865.0**

(22) Date de dépôt: **02.12.86**

(86) Numéro de dépôt international:
**PCT/FR86/00415**

(87) Numéro de publication internationale:
**WO 87/03215 04.06.87 Gazette 87/12**

(54) **PROCEDE ET INSTALLATION DE NEUTRALISATION DE FUMEES ACIDES PROVENANT NOTAMMENT DE LA COMBUSTION DE RESIDUS.**

(30) Priorité: **02.12.85 FR 8517792**

(43) Date de publication de la demande:
**02.12.87 Bulletin 87/49**

(45) Mention de la délivrance du brevet:
**16.08.90 Bulletin 90/33**

(84) Etats contractants désignés:
**AT BE CH DE GB IT LI LU NL SE**

(56) Documents cités:
**EP-A-0 138 781**
**DE-A-2 802 018**
**DE-A-3 325 140**

(73) Titulaire: **PROPIORGA**
**RN7, La Petite Calade**
**F-13540 Puyricard (FR)**

(72) Inventeur: **NOBILET, Bernard**
**10, le Petit Nice**
**F-13320 Bouc Bel Air (FR)**
Inventeur: **BONHOMME, Michel Les Jardins de Lavalette**
**Bât. A Avenue de Vert Bois**
**F-34000 Montpellier (FR)**
Inventeur: **DESPLAT, Philippe La Jipierre**
**Chemin des Plâtrières**
**F-13510 Eguilles (FR)**

(74) Mandataire: **Beauchamps, Georges et al**
**Cabinet Z.Weinstein 20, avenue de Friedland**
**F-75008 Paris (FR)**

Courier Press, Leamington Spa, England.

## Description

La présente invention concerne un procédé, et une installation en vue de la mise en oeuvre de ce procédé, en vue de la récupération optimum d'énergie thermique à partir de résidus et déchets.

L'invention concerne plus spécialement le traitement de résidus et déchets d'origine agricole ou industrielle comme de déchets d'origine urbaine tels que des ordures ménagères.

Le traitement d'ordures ménagères par voie d'incinération en vue d'une production d'énergie thermique, comme de déchets industriels ou agricoles, est une des voies permettant d'une part des économies d'énergie et d'autre part l'évacuation de déchets polluants.

Cependant le traitement de déchets par voie d'incinération pose de nombreux problèmes sur le plan notamment de l'écologie.

En effet les fours à incinération alimentés en déchets divers notamment dans le cas d'ordures ménagères, conduisent à brûler des sous-produits en vrac et qu'il est difficile de séparer tels que des produits d'origine synthétique; or ces derniers délivrent dans les gaz de combustion une proportion non négligeable de vapeurs acides corrosives.

Ces vapeurs corrosives ne peuvent être rejetées dans l'atmosphère et il est donc nécessaire pour éviter cet inconvénient de prévoir des installations soit de dilution de gaz, soit de lavage de fumée.

Mais ces installations si elles permettent le rejet dans l'atmosphère de fumée débarrassée d'un pourcentage excessif de vapeurs nocives, débitent des eaux acides qu'il est alors nécessaire de traiter par voie chimique avant d'en permettre le rejet dans la nature.

Et dans ces conditions, les installations procédant par incinération de déchets trouvent une limite économique en raison des problèmes de pollution qu'elles posent à leur tour et qu'il est donc nécessaire de régler.

On connaît par le brevet allemand publié DE—A—2 802 018, l'utilisation des cendres de combustion pour neutraliser les fumées acides.

L'invention concerne un procédé original présentant l'avantage de prévoir à la fois une neutralisation des vapeurs acides s'échappant dans les gaz de combustion en permettant par conséquent le rejet de ces gaz dans l'atmosphère et la production d'un sous-produit dérivé des cendres de combustion.

A cet effet l'invention concerne en premier lieu un procédé d'exploitation de résidus ou rejets d'origine industrielle, agricole ou urbaine, en vue de la récupération du pouvoir calorifique de ces résidus et procédant par incinération de ces derniers dans un four à combustion desservant au moins un récupérateur de chaleur pour la production d'énergie thermique sous forme de fluide caloporteur à haute température, et dans lequel les vapeurs et fumées de combustion chargées en anhydrides et acides sont neutralisées après passage dans l'échangeur par rencontre d'un flux d'un liquide de neutralisation de pH basique et constiué d'un lait formé d'une part d'eau et d'autre part des cendres provenant dudit four de combustion et mises en suspension et/ou solution dans ladite phase aqueuse, caractérisé en ce que les résidus constituant la matière première de départ, sont soumis à une opération de séparation granulométrique, par exemple dans un crible à tambour en vue de la séparation des particules les plus fines constituées principalement de matières organiques, seuls les éléments plus grossiers formant le refus de criblage et constitués de matières combustibles et inertes, étant utilisés pour alimenter le four d'incinération, et en ce que les résidus solides résultant de la phase de neutralisation sont séparés et mélangés aux particules les plus fines provenant de la phase de criblage pour constituer un amendement organo-minéral.

L'invention concerne également une installation pour la mise en oeuvre du procédé ci-dessus et du type comportant un four d'incinération lequel dessert un récupérateur de chaleur tel qu'une chaudière tubuliare dans lequel les gaz de combustion permettant la production d'énergie thermique véhiculée par un fluide caloporteur tel que de la vapeur sèche ou de l'eau surchauffée, ce récupérateur thermique étant relié à une chambre de neutralisation à laquelle aboutissent les gaz de combustion sortant du récupérateur et l'installation est caractérisée en ce qu'elle comporte des moyens de criblage situés en amont du four d'incinération, pour la séparation au sein des résidus, des particules les plus fines des éléments plus grossiers qui sont dirigés vers le four et en ce que l'installation comporte encore un mélangeur apte à recevoir les particules les plus fines ayant passé des moyens de criblage situés en amont du four d'incinération, et qui sont acheminées vers le mélangeur par les moyens de convoyage depuis lesdits moyens de criblage, le mélangeur étant relié également par des moyens de convoyage, à la base d'un bac de mélange et de formation d'un lait basique et/ou à la base de la chambre et ainsi aptes à acheminer les extraits solides sédimentés dans ledit bac et/ou la chambre jusqu'au mélangeur pour l'obtention d'un amendement organo-minéral.

D'autres caractéristiques et avantages de l'invention ressortiront de la description qui suit et qui est donnée en rapport avec une forme particulière présentée à titre d'exemples non limitatifs et à la lumière des dessins annexés.

La figure 1 représente une vue d'un schéma général des opérations d'incinération suivie de neutralisation des gaz de combustion.

La figure 2 représente une vue en coupe transversale de la chambre de neutralisation.

La figure 3 représente une vue de détail des parois à chicane équipant la chambre de neutralisation.

Selon l'ensemble des trois figures la matière de départ utilisée dans le cadre de l'installation et du procédé selon l'invention est constituée de résidus d'origine industrielle ou agricole ou encore de résidus urbains provenant de la collecte des ordures ménagères.

Ces résidus sont mis au tas 1 après avoir été soumis à une opération d'enlèvement des métaux de férailles par des moyens (non représentés) électro-magnétiques connus.

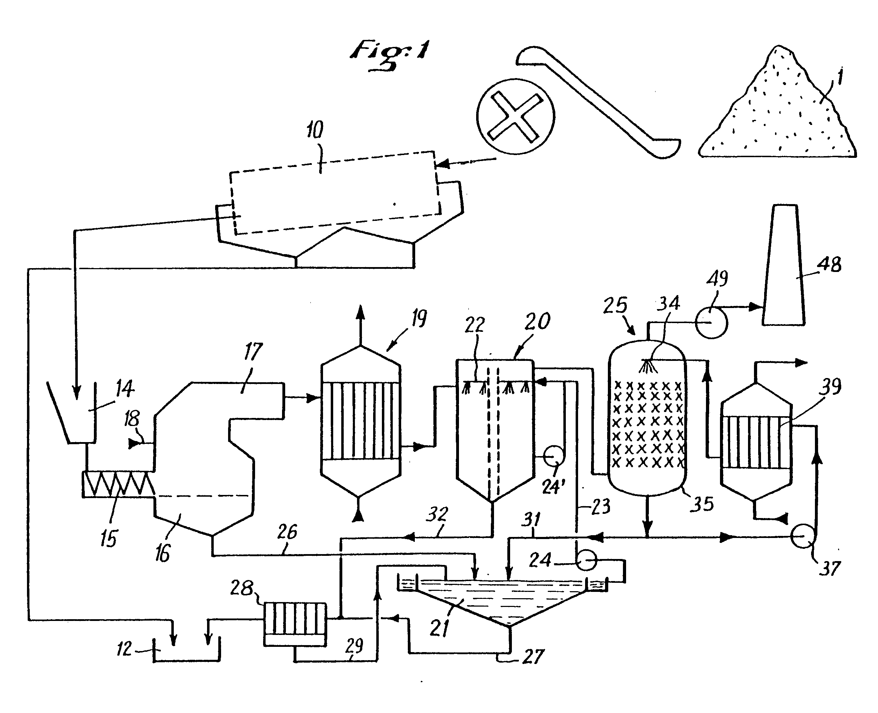

La matière première est prise au tas 1 et (après traitement éventuel dans un concasseur) acheminée vers un ensemble de criblage ou de séparation constitué éventuellement comme indiqué à titre d'exemple dans la figure 1, d'un premier crible à tambour rotatif 10; la partie destinée à constituer le combustible soumis à incinération et constituant le refus de criblage est acheminé vers la trémie d'alimentation 14 desservant un convoyeur d'alimentation par exemple du type à vis d'archimède 15 ou tout autre appareil contrôlant ainsi l'alimentation du four à incinération 16.

La combustion dans ce four est contrôlée de manière à respecter des consignes de température à chaque étage de leur oxydation par la présence de brûleurs et de dispositifs de régulation de l'air comburant.

Ce four comporte une chambre de post-combustion 17 et des brûleurs (non représenté) et alimentés en combustible fluide (gaz, fuel) depuis une source extérieure indépendante 18.

Et l'apport de ce combustible d'appoint permet d'obtenir une parfaite régularité dans le fonctionnement de l'ensemble, en compensant les variations dans les pouvoirs calorifiques des charges successives du combustible principal.

Les gaz de combustion sortant de la chambre de post-combustion 17 à une température de l'ordre de 900 à 1000°C passent dans un premier échangeur de chaleur formé par exemple d'une chaudière tubulaire 19 produisant en 18 un fluide caloporteur à haute température tel qu'une vapeur sèche ou de l'eau surchauffée ou tout autre fluide thermique; ce liquide caloporteur est dirigé vers les utilisations possibles telles qu'une turbine de production d'énergie électrique ou toute utilisation conventionnelle.

Les gaz de combustion sortant de l'échangeur 19 à une température de l'ordre de 250 à 350°C ne peuvent être rejetés dans l'atmosphère car ils sont fortement chargés en anhydrides ou vapeurs acides ($NO_2$, $HCl$ et $SO_3$) ces produits nocifs provenant généralement de la décomposition et de la combustion de matières plastiques et généralement des matières synthétiques (notamment PVC).

Il est donc impossible de rejeter ces fumées dans l'atmosphère; par ailleurs il est souhaitable de récupérer la chaleur latente et la chaleur sensible contenues dans ces fumées qui au sortir de la chaudière 19 sont encore à une température élevée.

L'invention résout avec élégance ce problème en assurant le lavage des fumées et leur neutralisation à haute température avant que ces fumées soient refroidies pour atteindre le point de rosée, au-delà duquel seraient formés les acides corrosifs et agressifs pour les métaux constituant les enceintes de l'installation.

A cet effet les gaz de combustion sont traités et neutralisés dans un ensemble de neutralisation formé de la chambre de neutralisation 20 associée à un bac inférieur 21.

Dans la chambre de neutralisation 20 est prévu au sommet une ou plusieurs rampes 22 projetant dans la chambre contenant les gaz de combustion en transit une pluie d'un liquide constituant un lait de neutralisation à pH basique et provenant du bac 21.

Ce lait forme un bain à la partie inférieure de la chambre 20 d'où il est recyclé par le circuit de recyclage 23 avec pompe 24'.

Le lait basique de neutralisation qui est recyclé en permanence reçoit un appoint liquide de l'effluent 31 provenant de la tour de condensation 25 décrite ultérieurement et alimentant le bac 21 et auquel sont incorporées les cendres provenant du four à incinération 16 acheminées depuis le circuit de convoyage 26.

Un mélangeur 30 éventuellement intermittent assure l'homogénéité de l'ensemble au sein du bac 21 tandis que les particules sédimentées à la base du bac 21 sont acheminées par le convoyeur 27 vers un filtre presse 28 ou un autre système de séparation d'où le liquide de filtration par exemple est recyclé en 29. Ce filtre presse 28 reçoit également par le circuit 32 les boues sédimentées à la base de la chambre de neutralisation 20.

Le combustible alimentant le four d'incinération comporte généralement un pourcentage non négligeable de résidus (papier, emballage, carton) comportant une forte proportion de charges minérales aboutissant à un pourcentage de cendres de l'ordre de 10 à 16%; ces cendres minérales sont formées de sels contenant une proportion importante d'oxydes de calcium et de potassium et sont donc fortement basiques. Ces cendres sont déversées dans la phase liquide du bac 21 où elles sont mises en suspension ou (totalement ou partiellement) en solution pour constituer un lait à pH fortement basique lequel peut être prélevé depuis par exemple une goulotte périphérique ou tout autre système par le circuit 23 aboutissant à la rampe de pulvérisation 22.

Au sein de la chambre la phase liquide formée du lait basique ci-dessus décrit rencontre les vapeurs acides qui sont neutralisées en aboutissant à la formation de sels généralement insolubles lesquels sédimentent dans le fond de la chambre 20 pour aboutir par exemple par le circuit d'évacuation 32 et au filtre presse 28.

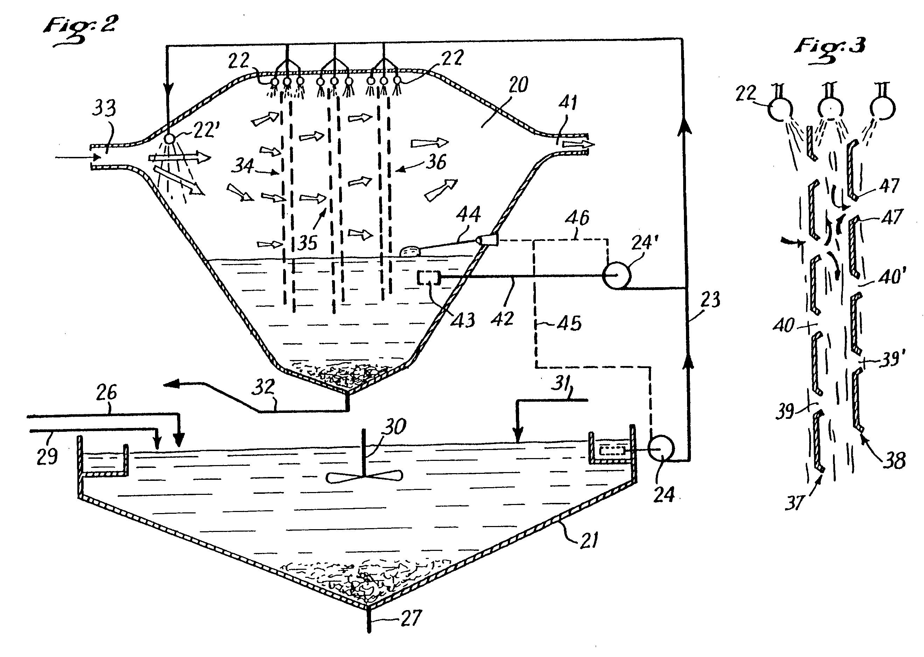

La figure 2 donne une vue détaillée de la constitution de la chambre de neutralisation 20.

Les fumées chargées en vapeurs acides arrivent par l'ouverture d'alimentation 33 pour se répandre dans l'ensemble de l'enceinte constituée par la chambre 20.

Mais dès le débouché de l'ouverture d'alimentation 33, les vapeurs traversent un premier rideau de lait de neutralisation déversé depuis la rampe 22'.

Cette rampe est positionnée au débouché de la canalisation 33 et elle permet une première précipitation des sels insolubles formés rapidement étant donné le choc thermique auquel sont soumis les vapeurs qui débouchent à une température comprise entre 200 et 300° et qui rencontrent alors un rideau de pluie à une température voisine de la température ambiante.

Ensuite les fumées traversent la chambre 20 dans un parcours tourbillonnaire provoqué par la présence des dispositifs à chicane 34, 35, 36.

Chacun de ces dispositifs est lui-même constitué de deux parois 37, 38 (figure 3) ces parois étant pourvues d'ouvertures 39, 40, 39', 40' qui sont disposées en quinconce d'une paroi à l'autre.

On voit que dans ces conditions les filets gazeux qui ont traversé une ouverture 39, 40 d'une paroi 37 arrivent dans l'espace interstitiel entre les deux parois 37 et 38 sans rencontrer en face d'eux une ouverture correspondante.

Les filets gazeux sont donc détournés et conduits à suivre un parcours engendrant des remous tourbillonnaires (comme représenté sur la figure 3) avant de s'écouler à travers le second jeu d'ouvertures 39', 40' disposé sur la seconde paroi 38, les bords des ouvertures comportent un rebord ou retour légèrement incurvé 47, 47'.

Après avoir passé un premier dispositif à chicane 34 les fumées doivent passer successivement un second 35 et un troisième 36.

Et ces dispositifs à chicane 34, 35, 36 sont arrosés en permanence depuis les rampes 22 de sorte que les filets des fumées traversant les dispositifs à chicane traversent en réalité un rideau de pluie et lèchent en permanence les parois 37, 38 qui comportent un film en couche mince de la phase liquide déversée depuis les rampes 22 et constituée du lait basique de neutralisation.

On obtient ainsi un système dans lequel l'interface entre les deux phases gazeuses et liquides représente une surface extrêmement importante en facilitant les échanges et les réactions entre les deux phases, les vapeurs acides contenues dans la phase gazeuse étant appelées à se combiner avec les principes basiques contenus dans le lait de neutralisation.

Et dans ces conditions les vapeurs et fumées qui arrivent sur la partie droite de la chambre de neutralisation, lorsqu'elles vont s'échapper par la conduite 41 sont pratiquement débarrassées de toute acidité.

Le lait de neutralisation s'accumule dans la partie inférieure de la chambre 20 où il constitue un bain d'où il est prélevé par la conduite 42 à crépine 43 et recyclé par la pompe 24', vers le circuit d'alimentation 23 lui-même alimenté par la pompe 24 depuis le bac inférieur 21.

L'alimentation de la chambre 20 en lait de neutralisation peut-être par conséquent réglée à partir des pompes 24, 24' dont le fonctionnement peut être lui-même modulé depuis la sonde de niveau 44 par les circuits d'asservissement 45, 46.

Mais on pourrait également prévoir, dans le cadre d'une programmation et d'une commande centralisée que les données enregistrées par la sonde de niveau 44 soient envoyées à une unité centrale apte à déclencher des ordres en fonction de l'ensemble des données reçues, ceci tant en ce qui concerne le recyclage et l'alimentation de la chambre de neutralisation que les autres éléments composant la chaîne d'ensemble.

Les gaz épurés sortant de la chambre de neutralisation 20 et fortement chargés en vapeur d'eau peuvent alors être soumis à une opération de condensation dans la chambre de condensation ou condenseur 25 où ils rencontrent à contre-courant une eau de ruissellement provenant du ou des pulvérisateur (s) supérieur (s) 34.

L'eau provenant du ou des pulvérisateur (s) 34 s'écoule sur un garnissage connu tel qu'un garnissage du type anneau de Rachig 35 qui peut être avantageusement du type décrit dans les brevets d'invention français no. 7 930 419 et 8 113 369.

L'eau de ruissellement, enrichie de l'eau de condensation provenant des gaz épurés est évacuée à la base de la colonne 25 d'où elle est partiellement recyclée par le circuit 31 vers le bac 21 tandis que la majeure partie est acheminée depuis le circulateur 37 vers un échangeur de chaleur 39 basse température.

Les fumées épurées sortent du sommet de la tour 25 ayant perdu sensiblement toutes leurs calories et peuvent être forcées par le circulateur 49 vers la cheminée 48 de rejet dans l'atmosphère.

**Revendications**

1. Procédé d'exploitation de résidus ou rejet d'origine industrielle, agricole ou urbaine, en vue de la récupération du pouvoir calorifique de ces résidus et procédant par incinération de ces derniers dans un four (16) à combustion desservant au moins un récupérateur de chaleur (19) pour la production d'énergie thermique sous forme de fluide caloporteur à haute température, et dans lequel les vapeurs et fumées de combustion chargées en anhydrides et acides sont neutralisées après passage dans l'échangeur (19) par rencontre d'un flux d'un liquide de neutralisation de pH basique et constitué d'un lait formé d'une part d'eau et d'autre part des cendres provenant dudit four de combustion et mises en suspension et/ou solution dans ladite phase aqueuse, caractérisé en ce que les résidus constituant la matière première de départ, sont soumis à une opération de séparation granulométrique, par exemple dans un crible à tambour (10) en vue de la séparation des particules les plus fines constituées principalement de matières organiques, seuls les éléments plus grossiers formant le refus de criblage et constitués de matières combustibles et inertes, étant utilisés pour alimenter le four d'incinération (16), et en ce que les résidus solides résultant de la phase de neutralisation sont séparés et mélangés aux particules les plus fines provenant de la phase de criblage pour constituer un amendement organo-minéral.

2. Procédé selon la revendication 1, caractérisé en ce que selon un développement de l'invention les fumées au sortir de la phase de neutralisation sont soumises à condensation pour éliminer la vapeur l'eau, l'eau provenant de cette condensation étant récupérée pour constituer avec les cendres le lait de neutralisation.

3. Procédé selon l'une des revendications 1 ou 2, caractérisé en ce que la phase de condensation des fumées épurées est prévue avec recyclage de l'eau chaude provenant de la condensation des vapeurs en dessous du point de rosée et cette eau est recyclée pour rencontrer à contre-courant les vapeurs épurées, l'eau chaude avant son recyclage alimentant au moins un échangeur de chaleur basse température (39) auquel elle cède ses calories.

4. Installation en vue de la mise en oeuvre du procédé selon l'une des revendications 1 à 3, du type comportant un four d'incinération (16) lequel dessert un récupérateur de chaleur (19) tel qu'une chaudière tubulaire dans lequel les gaz de combustion permettent la production d'énergie thermique véhiculée par un fluide caloporteur tel que de la vapeur sèche ou de l'eau surchauffée, ce récupérateur thermique (19) étant relié à une chambre de neutralisation (20) à laquelle aboutissent les gaz de combustion sortant du récupérateur (19) et l'installation est caractérisée en ce qu'elle comporte des moyens de criblage (10) situés en amont du four d'incinération, pour la séparation au sein des résidus, des particules les plus fines des éléments plus grossiers qui sont dirigés vers le four et en ce que l'installation comporte encore un mélangeur (12) apte à recevoir les particules les plus fines ayant passé des moyens de criblage (10) situés en amont du four d'incinération, et qui sont acheminées vers le mélangeur par des moyens de convoyage depuis lesdits moyens de criblage, le mélangeur étant relié également par des moyens de convoyage (27, 32), à la base d'un bac (21) de mélange et de formation d'un lait basique et/ou à la base de la chambre (20) et ainsi aptes à acheminer les extraits solides sédimentés dans ledit bac (21) et/ou la chambre (20) jusqu'au mélangeur pour l'obtention d'un amendement organo-minéral.

5. Installation selon la revendication 4, caractérisé en ce que ladite chambre de neutralisation comporte en son sein au moins une rampe de pulvérisation (22) du lait basique provenant du bac (21) de mélange et de formation du lait de neutralisation alimenté en eau d'une part et alimenté d'autre part par un convoyeur (26) en cendres de combustion depuis le four d'incinération (16), ledit bac (21) étant relié par un circuit de recyclage (23) à la rampe de pulvérisation (22) située dans la chambre de neutralisation et le bac (21) comporte des moyens d'évacuation (27) des résidus solides décantés à la base du bac.

6. Installation selon la revendication 4 ou 5, caractérisée en ce qu'elle comporte un condenseur alimenté par les fumées épurées au sortir de la chambre de neutralisation et chargées d'humidité, ces fumées aboutissant au condenseur constitué d'une colonne à garnissage (25) alimentée en son sommet par de l'eau de ruissellement à basse température amenant les fumées à une température égale ou inférieure au point de rosée en provoquant la condensation de la vapeur d'eau contenue dans les fumées, l'eau de ruissellement réchauffée par échange thermique et accrue de l'eau de condensation, à une température légèrement inférieure au point de rosée étant recueillie à la base de ladite colonne à garnissage et étant recyclée au sommet de la colonne (25) après passage par au moins un échangeur de chaleur (39) auquel elle cède ses calories, une partie de ladite eau recueillie à la base de la colonne étant dirigée vers le bac 21.

7. Installation selon l'une des revendications 4, 5 ou 6, caractérisée en ce qu'elle comporte des moyens de pilotage programmables aptes à commander de façon automatique l'ensemble des paramètres de fonctionnement de l'installation notamment l'alimentation du four d'incinération (16) en matière combustible, l'alimentation (18) du/des brûleur (s) de combustion et post-combustion, l'alimentation et le recyclage du lait basique entre le bac (21) correspondant et la chambre de neutralisation (20), l'alimentation et le recyclage du condenseur (25), les circulateurs interposés sur les circuits de fluides, les motorisations des moyens de convoyage des phases solides et boueuses.

8. Installation selon l'une des revendications 5 à 7, caractérisée en ce que la chambre de neutralisation (20) comporte une première rampe (22') déversant un lait de neutralisation obtenu par mise en suspension des cendres dans une phase aqueuse, cette rampe étant située au débouché de la conduite 33 par laquelle les fumées pénètrent dans ladite chambre.

9. Installation selon l'une des revendications 4 à 8 ci-dessus, caractérisée en ce que la chambre de neutralisation (20) comporte un dispositif à chicane (34, 35, 36) formé de parois (37, 38) dont les ouvertures (40, 40') permettant le passage des fumées sont décalées d'une paroi à l'autre obligeant les fumées à suivre un parcours complexe selon un régime tourbillonnaire.

10. Installation selon la revendication 9, caractérisée en ce que les dispositifs à chicane sont formés de plaques métalliques (37, 38), telles qu'en acier inoxydable et dont les ouvertures (39, 39', 40, 40') non concordantes d'une paroi à l'autre comportent sur leurs bords un retour incurvé (47, 47').

11. Installation selon la revendication 9 ou la revendication 10, caractérisée en ce que les parois formant chicane sont arrosées par des secondes rampes (22) déversant sur lesdites parois et dans l'espace interstitiel entre les parois une pluralité de rideaux de pluies formés dudit lait basique de neutralisation.

12. Installation selon l'une des revendications 7 à 11, caractérisée en ce que la chambre de neutralisation (20) comporte à sa base un bain formé du lait de neutralisation accumulé et provenant des rampes (22, 22') et la chambre est pourvue d'une sonde de niveau dudit bain contrôlant la recirculation de la phase liquide de ce dernier vers le circuit de recyclage (23) par lequel la phase liquide provenant dudit bain rejoint le lait provenant du bac (21) inférieur de mélange des cendres et d'une arrivée d'eau.

13. Installation selon l'une des revendications 7 à 12, caractérisée en ce que les boues décantées à la base de la chambre (20) de neutralisation et les boues décantées à la base du bac (21) de mélange sont aptes à être acheminées par un circuit d'évacuation (27, 32) vers un dispositif de filtration (28) dont la phase liquide est apte à être recyclée par un circuit (29) vers ledit bac (21).

## Patentansprüche

1. Verfahren zur Verwertung von Rückständen oder Abfällen industriellen, landwirtschaftlichen oder städtischen Ursprungs durch Rückgewinnung des Heizwerts dieser Rückstände und durch deren Verbrennung in einem mit wenigstens einem Wärmerückgewinner (19) in Verbindung stehenden Verbrennungsofen (16) zur Erzeugung thermischer Energie in der Form eines Wärmeübertragungsfluids unter hoher Temperatur, wobei die Anhydride und Säuren enthaltenden Dämpfe und Rauchgase nach Durchgang durch den Ofen im Austauscher (19) im Gegenstrom einer Neutralisationsflüssigkeit mit basischem pH-Wert neutralisiert werden, die aus einer Aufschlemmung von einerseits Wasser und andererseits in Suspension und/oder Lösung in der Wasserphase gebrachten Verbrennungsrückständen aus dem Verbrennungsofen besteht, dadurch gekennzeichnet, daß die das Ausgangsmaterial bildenden Rückstände dem Vorgang einer Trennung nach Korngröße zur Abtrennung der feinsten, hauptsächlich aus organischen Bestandteilen bestehenden Partikel unterworfen werden, z.B. in einem Drehsieb (10), wobei nur die schwereren, den Rückstand der Siebung bildenden und aus verbrennbaren und inerten Bestandteilen bestehenden Elmente in den Verbrennungsofen (16) eingegeben werden, und daß die festen Rückstände aus der Neutralisationsphase abgetrennt und mit den feinsten Partikeln aus der Siebphase gemischt werden, um ein organischmineralogisches Düngemittel zu ergeben.

2. Verfahren nach Anspruch 1, dadurch gekennzeichnet, daß gemäß einer Weiterbildung der Erfindung die Rauchphase beim Austritt aus der Neutralisationsphase einer Kondensation unterworfen wird, um den Wasserdampf zu eliminieren, wobei das Wasser aus dieser Kondensation zur Bildung der Neutralisationsaufschlemmung mit den Verbrennungsrückständen wiederverwendet wird.

3. Verfahren nach einem der Ansprüche 1 oder 2, dadurch gekennzeichnet, daß die Kondensationsphase der gereinigten Rauchgase mit dem Rückfluß des heißen Wassers aus der Kondensation des Dampfes unter dem Taupunkt versetzt wird, und daß dieses Wasser im Gegenstrom zum gereinigten Dampf rückgeführt wird, wobei das heiße Wasser vor dem Rückfluß wenigstens einem Niedertemperatur-Wärmetauscher (39) zugeführt wird, dem es seinen Wärmeinhalt abgibt.

4. Vorrichtung zur Durchführung des Verfahrens nach einem der Ansprüche 1 bis 3 mit einem Verbrennungsofen (16), der mit einem Wärmerückgewinner (19), wie z.B. einem Röhrenerhitzer, in Verbindung steht, in dem die Verbrennungsgase die Erzeugung von über ein Wärmeübertragungsmittel, wie z.B. trockener Dampf oder überhitztes Wasser, transportierter thermischer Energie erlauben, wobei der Wärmerückgewinner (19) mit einer Neutralisationskammer (20) verbunden ist, zu der die Verbrennungsgase aus dem Rückgewinner (19) geführt werden, dadurch gekennzeichnet, daß sie vor dem Verbrennungsofen Mittel zum Sieben (10) zur Abtrennung der Rückstände aufweist, der feinsten Partikel der gröberen Elemente, die zum Ofen geleitet werden, und daß sie weiterhin einen Mischer (12) zur Aufnahme der feinsten Partikel nach Durchgang durch die Mittel zum Sieben (10) vor dem Verbrennungsofen aufweist, welche über Transportmittel von den Mitteln zum Sieben aus zum Mischer geleitet werden, wobei der Mischer ebenso über Transportmittel (27, 32) mit dem unteren Teil eines Mischbehälters (21) zur Bildung einer basischen Aufschlemmung und/oder dem unteren Teil der Kammer (20) verbunden ist, wodurch die festen, im Behälter (21) und/oder in der Kammer (20) sedimentierten Extrakte bis zum Mischer zur Erzielung eines organisch-mineralogischen Düngemittels geleitet werden können.

5. Vorrichtung nach Anspruch 4, dadurch gekennzeichnet, daß die Neutralisationskammer (20) in ihrem Innern mindestens eine Pulverisierungsvorrichtung (22) der basischen Aufschlemmung aus dem Mischbehälter (21) zur Bildung der Neutralisationsaufschlemmung aufweist, die einerseits als Wasser und andererseits über ein Transportmittel (26) als Verbrennungsrückstand vom Verbrennungsofen (16) zugeführt wird, wobei der Behälter (21) über einen Rückführkreis (23) mit der Neutralisationskammer angeordneten Pulverisierungsvorrichtung (22) verbunden ist und Entleermittel (27) für die am Grund des Behälters abgesetzten festen Rückstände aufweist.

6. Vorrichtung nach Anspruch 4 oder 5, dadurch gekennzeichnet, daß sie einen Kondensator aufweist, dem die nach der Neutralisationskammer gereinigten und mit Feuchtigkeit versetzten Rauchgase zugeführt werden, wobei der Kondensator aus einer Füllkörpersäule (25) besteht, der an ihrer Spitze Rieselwasser unter niedriger Temperatur zugeführt wird, welches die Rauchgase unter einer Temperatur gleich oder unterhalb des Taupunkts mitführt, wodurch die Kondensation des Wasserdampfs in den Rauchgasen bewirkt wird, wobei das durch Wärmetausch erwärmte und um das Kondensationswasser vermehrte Rieselwasser unter einer Temperatur leicht unterhalb des Taupunkts am Grund der Füllkörpersäule gesammelt und nach Durchgang durch wenigstens einen Wärmetauscher (39), dem es seinen Wärmeinheit abgibt, zur Spitze der Säule (20) zurückgeführt wird, wobei ein Teil des am Grund der Säule gesammelten Wassers zum Behälter (21) geführt wird.

7. Vorrichtung nach einem der Ansprüche 4, 5 oder 6, dadurch gekennzeichnet, daß sie programmierbare Mittel zum Steuern aufweist, die zur automatischen Steuerung der Gesamtheit der Funktionsparameter der Vorrichtung geeignet sind, insbesondere für die Zuführung von brennbarem Material zum Verbrennungsofen (16), die Zuführung (18) zum (zu den) Brenner(n) und Nachbrenner(n), die Zuführung und Rückführung der basischen Aufschlemmung zwischen dem entsprechenden Behälter (21) und der Neutralisationskammer (20), die Zuführung und Rückführung zom Kondensator (25), die in die Fluidkreise eingesetzten Pumpen, die Motoren für die Transportmittel der festen und schlammigen Phasen.

8. Vorrichtung nach einem der Ansprüche 5 bis 7, dadurch gekennzeichnet, daß die Neutralisationskammer (20) eine erste eine Neutralisationsaufschlemmung liefernde Vorrichtung (22') aufweist, die dadurch erhalten wird, daß Verbrennungsrückstände in einer Wasserphase in Suspension gebracht werden, wobei diese Vorrichtung (22') am Ausgang der Leitung (33) angeordnet ist, über die die Rauchgase in die Kammer eintreten.

9. Vorrichtung nach einem der Ansprüche 4 bis 8, dadurch gekennzeichnet, daß die Neutralisationskammer (20) eine aus Wänden (37, 38) bestehende Stauvorrichtung (34, 35, 36) aufweist, deren Öffnungen (40, 40') für den Durchgang der Rauchgase von einer Wand zur anderen versetzt sind, wodurch die Rauchgase auf ihrem Weg verwirbelt werden.

10. Vorrichtung nach Anspruch 9, dadurch gekennzeichnet, daß die Stauvorrichtungen aus Metallplatten (37, 38) bestehen, wie z.B. aus rostfreiem Stahl, deren von einer Wand zur anderen nicht zusammenfallende Öffnungen (39, 39', 40, 40') an ihren Rändern eine Rückbiegung (47, 47') aufweisen.

11. Vorrichtung nach Anspruch 9 oder 10, dadurch gekennzeichnet, daß die Stauwände von zweiten Vorrichtungen (22) berieselt werden, die auf diese Wände und in den Zwischenraum zwischen den Wänden eine Vielzahl von aus der basischen Neutralisationsaufschlemmung bestehenden Schauern ablassen.

12. Vorrichtung nach einem der Ansprüche 7 bis 11, dadurch gekennzeichnet, daß die Neutralisationskammer (20) an ihrem Grund ein von der gesammelten und von den Vorrichtungen (22, 22') kommenden Neutralisationsaufschlemmung gebildetes Bad aufweist, und daß die Kammer mit einem Füllstandanzeiger für das Bad versehen ist, der den Rückfluß der flüssigen Phase von dort zum Rückführkreis (23) steuert, über den die flüssige Phase von dem Bad zur Aufschlemmung aus dem unteren Mischbehälter (21) der Verbrennungsrückstände und einem Wasserzulauf hinzukommt.

13. Vorrichtung nach einem der Ansprüche 7 bis 12, dadurch gekennzeichnet, daß die am Grund der Neutralisationskammer (20) abgesetzten Schlämme und die am Grund des Mischbehälters (21) abgesetzten Schlämme über einen Entleerungskreis (27, 32) zu einer Filtriervorrichtung (28) geführt werden können, deren flüssige Phase über einen Kreis (29) zum Behälter (21) rückgeführt werden kann.

**Claims**

1. Process for exploiting residues or waste of industrial, agricultural or urban origin, with a view to recovering the calorific power of these residues and proceeding by incineration of the latter in a combustion furnace 16 serving at least one heat recuperator 19 for the production of thermal energy in the form of heat-transfer fluid at high temperature, and in which the combustion vapours and fumes laden with anhydrides and acids are neutralized after passage in the exchanger 19 by encounter with a flow of a neutralization liquid of basic pH and constituted by a slurry formed on the one hand by water and on the other hand by the ashes coming from said combustion furnace and placed in suspension and/or solution in said aqueous phase, characterized in that the residues constituting the starting raw material are subjected to an operation of granulometric separation, for example in a sieve drum 10 with a view to the separation of the finest particles principally constituted by organic materials, only the coarser elements forming the oversize and constituted by combustible, inert materials, being used for supplying the incineration furnace 16 and in that the solid residues resulting from the neutralization phase are separated and mixed with the finest particles coming from the screening phase in order to constitute an organo-mineral soil improvement.

2. Process according to Claim 1, characterized in that, according to a development of the invention, the fumes leaving the neutralization phase are subjected to condensation in order to eliminate the water vapour, the water coming from such condensation being recovered to constitute with the ashes the neutralization slurry.

3. Process according to one of Claims 1 or 2, characterized in that the phase of condensation of the purified fumes is provided with recycling of the hot water coming from the condensation of the vapours below the dew point and this water is recycled to encounter in counter-flow the purified vapours, the hot water before its recycling supplying at least one low-temperature heat exchanger 39 to which it yields its calories.

4. Installation for carrying out the process according to one of Claims 1 to 3, of the type comprising an incineration furnace 16 which serves a heat recuperator 19 such as a tubular boiler in which the combustion phases allow the production of thermal energy conveyed by a heat-transfer fluid such as dry steam or superheated water, this heat recuperator 19 being connected to a neutralization chamber 20 at which the combustion gases leaving the recuperator 19 terminate, and the installation is characterized in that it comprises screening means 10 located upstream of the incineration furnace, for the separation within the residues of the finest particles from the coarsest elements which are directed towards the furnace and in that the installation further comprises a mixer 12 adapted to receive the finest particles having passed through the screening means 10 located upstream of the incineration furnace, and which are conveyed towards the mixer by conveying means from said screening means, the mixer also being connected by conveying means 27, 32 to the base of a tank 21 for mixing and forming a basic slurry and/or to the base of the chamber 20 and thus adapted to convey the solid extracts sedimented in said tank 21 and/or the chamber 20 as far as the mixer in order to obtain an organo-mineral soil improvement.

5. Installation according to Claim 4, characterized in that said neutralization chamber comprises therewithin at least one spray nozzle pipe 22 for the basic slurry coming from the tank 21 for mixing and forming the neutralization slurry supplied with water on the one hand and on the other hand supplied by a conveyor 26 with combustion ashes from the incineration furnace 16, said tank 21 being connected by a recycling circuit 23 to the spray nozzle pipe 22 located in the neutralization chamber and the tank 21 comprises means 27 for evacuating the solid residues decanted at the base of the tank.

6. Installation according to Claim 4 or 5, characterized in that it comprises a condenser supplied by the purified fumes leaving the neutralization chamber and laden with humidity, these fumes terminating at the condenser constituted by a packed column 25 supplied at its summit by trickling water at low temperature taking the fumes to a temperature equal to or lower than the dew point, provoking the condensation of the water vapour contained in the fumes, the trickling water reheated by heat exchange and increased by the condensation water, at a temperature slightly lower than the dew point, being collected at the base of said packed column and being recycled to the summit of the column 25 after passage through at least one heat exchanger 39 to which it yields its calories, part of said water collected at the base of the column being directed towards the tank 21.

7. Installation according to one of Claims 4, 5 or 6, characterized in that it comprises programmable control means adapted automatically to control all the operational parameters of the installation, particularly the supply of the incineration furnace 16 with combustible material, the supply 18 of the combustion and post-combustion burner(s), the supply and recycling of the basic slurry between the corresponding tank 21 and the neutralization chamber 20, the supply and recycling of the condenser 25, the circulators interposed on the fluid circuits, the motorizations of the means for conveying the solid and slurry phases.

8. Installation according to one of Claims 5 to 7, characterized in that the neutralization chamber 20 comprises a first spray nozzle pipe 22' pouring a neutralization slurry obtained by placing the ashes in suspension in an aqueous phase, this pipe being located at the opening of the conduit 33 via which the fumes penetrate in said chamber.

9. Installation according to one of Claims 4 to 8 hereinabove, characterized in that the neutralization chamber 20 comprises a baffle device 34, 35, 36 formed by walls 37, 38 whose openings 40, 40' allowing passage of the fumes are offset from one wall to the other, obliging the fumes to follow a complex, eddying path.

10. Installation according to Claim 9, characterized in that the baffle devices are formed by metallic plates 37, 38, such as of stainless steel, and whose openings 39, 39', 40, 40', not in register from one wall to the other, comprise on their edges an incurved flange 47, 47'.

11. Installation according to Claim 9 or Claim 10, characterized in that the walls forming baffle are sprayed by second nozzle pipes 22 pouring on said walls and in the interstitial space between the walls a plurality of rain curtains formed by said basic neutralization slurry.

12. Installation according to one of Claims 7 to 11, characterized in that the neutralization chamber 20 comprises at its base a bath formed by the accumulated neutralization slurry coming from the nozzle pipes 22, 22' and the chamber is provided with a probe sensing the level of said bath monitoring the recirculation of the liquid phase from the latter towards the recycling circuit 23 by which the liquid phase coming from said bath joins the slurry coming from the lower tank 21 for mixing the ashes and a water inlet.

13. Installation according to one of Claims 7 to 12, characterized in that the sludge decanted at the base of the neutralization chamber 20 and the sludge decanted at the base of the mixing tank 21 is adapted to be conveyed by an evacuation circuit 27, 32 towards a filtration device 28 of which the liquid phase is adapted to be recycled by a circuit 29 towards said tank 21.

Fig.1

EP 0 247 113 B1

Fig.2

Fig.3